# EUROPÄISCHE PATENTSCHRIFT

(11) **EP 1 065 094 B1**
(45) Veröffentlichungstag und Bekanntmachung des Hinweises auf die Patenterteilung: **01.02.2006**
(21) Anmeldenummer: 00113343.8
(22) Anmeldetag: 23.06.2000
(51) Int. Cl.: B60N 2/28, B60R 21/01

(54) **Einrichtung zur Erfassung der Ausrichtung eines auf einem Fahrzeugsitz eines Kraftfahrzeuges befestigten Kindersitzes**
Apparatus for detecting the aligment of a child seat, mounted on automotive vehicle seat
Appareil pour détecter l'alignement d'un siège d'enfant, monté sur un siège de véhicule automobile

(30) Priorität: 02.07.1999 DE 19930703
(43) Veröffentlichungstag der Anmeldung: 03.01.2001
(73) Patentinhaber: ADAM OPEL AG, 65423 Rüsselsheim (DE)
(72) Erfinder: Roos, Günter F., 65468 Trebur (DE)
(74) Vertreter: Daniel, Ulrich W.P.

(56) Entgegenhaltungen:
- EP-A- 0 830 972
- DE-U- 29 619 668
- US-A- 5 851 026

## Beschreibung

Die Erfindung betrifft eine Einrichtung zur Erfassung der Ausrichtung eines auf einem Fahrzeugsitz eines Kraftfahrzeuges befestigten Kindersitzes nach dem Oberbegriff des Patentanspruchs 1.

Eine solche Einrichtung ist aus der EP 0 708 002 A1 bekannt. Die Transponder sind auf einander gegenüberliegenden Seiten des Kindersitzes angeordnet. Das Sensorelement hat für die beiden Transponder in der linken und rechten Hälfte des Fahrzeugsitzes je eine Sendeantenne und eine Empfangsantenne. Jeder Transponder verändert ein von den Sendeantennen erzeugtes Erregerfeld in unterschiedlicher Weise. Nach einer Auswertung der von den Empfangsantennen empfangenen Signale der Transponder lässt sich anschließend ermitteln, in welcher Richtung der Kindersitz ausgerichtet ist. Mit dieser Einrichtung lässt sich beispielsweise die Ansteuerung eines Airbags unterbinden, wenn der Kindersitz mit seiner Lehne in Fahrtrichtung weisend montiert ist. Nachteilig bei dieser Einrichtung ist, dass sie nur für weitgehend ebene Fahrzeugsitze geeignet ist, da bei in Fahrtrichtung des Kraftfahrzeuges ansteigenden Sitzflächen des Fahrzeugsitzes der Kindersitz entweder in Fahrtrichtung oder entgegen der Fahrtrichtung mit einem unzulässigen Neigungswin kel montiert ist. Man könnte daran denken, einen Keil unter den Kindersitz zu legen. Dies führt jedoch zu einem sehr großen Abstand zwischen dem Transponder und dem Sensorelement und damit zu fehlerhaften Messungen des Sensorelements.

Die DE 195 18 410 Al zeigt ebenfalls eine Einrichtung zum Erkennen der Ausrichtung eines auf einem Fahrzeugsitz montierten Kindersitzes. Hierbei hat der Kindersitz zwei in entgegengesetzte Richtungen weisende, zwischen einem im Fahrzeugsitz montierten Transponder und dem Sensorelement schiebbare Kufen. Eine der Kufen hat einen Transponder, der den im Fahrzeugsitz montierten Transponder überlagert. Diese Einrichtung eignet sich ebenfalls nur für im Wesentlichen eben gestaltete Fahrzeugsitze. Ein Keil zum Ausgleich der Sitzneigung des Kindersitzes lässt sich zudem nicht montieren.

Aus der US 5 851 026 A ist eine Einrichtung zur Erfassung der Ausrichtung eines auf dem Fahrzeugsitz montierten Kindersitzes bekannt. Bei dieser Lösung kann der Kindersitz oberhalb der Sitzfläche des Fahrzeugsitzes auf einem zwischen dem Kindersitz und der Sitzfläche angeordneten Element angebracht werden. Die Signale der zur Erfassung der Ausrichtung des Kindersitzes vorgesehenen Transponder hängen dabei von dem Abstand des Kindersitzes oberhalb der Sitzfläche ab. Um die erforderliche Signalstärke zu gewährleisten können die Transponder an dem zwischen dem Kindersitz und der Sitzoberfläche befindlichen Element angeordnet sein.

Der Erfindung liegt das Problem zugrunde, eine Einrichtung der eingangs genannten Art so zu gestalten, dass die Ausrichtung des Kindersitzes zuverlässig erfass bar und für in Fahrtrichtung des Kraftfahrzeuges ansteigende Sitzflächen von Fahrzeugsitzen geeignet ist.

Dieses Problem wird erfindungsgemäß durch die Merkmale des Patentanspruchs 1 gelöst.

Durch diese Gestaltung gleicht der Zwischenkeil den Neigungswinkel des Fahrzeugsitzes aus, so dass die Sitzschale auf einer ebenen Fläche wahlweise mit ihrer Lehne in oder entgegen der Fahrtrichtung des Kraftfahrzeuges weisend ausgerichtet werden kann. Die Transponder sind innerhalb des Zwischenkeils und damit besonders nahe an dem im Fahrzeugsitz befindlichen Sensorelement angeordnet. Fehlmessungen des Sensorelements lassen sich daher einfach vermeiden. Bei einem Wechsel der Ausrichtung des Kindersitzes lassen sich die Transponder vertauschen, so dass das Sensorelement die Ausrichtung des Kindersitzes anhand der Positionen der Transponder einfach ermitteln kann.

Eine fehlerhafte Montage der Transponder gegenüber der Sitzschale lässt sich gemäß einer vorteilhaften Weiterbildung der Erfindung einfach vermeiden, wenn einer der Transponder formschlüssig mit der Sitzschale zusammenarbeitende, mechanische Codiermittel aufweist.

Die Codiermittel gestalten sich gemäß einer anderen vorteilhaften Weiterbildung der Erfindung konstruktiv besonders einfach, wenn die Codiermittel eine auf einem der Transponder angeordnete Noppe und eine in der Sitzschale angeordnete Ausnehmung für die Noppe aufweisen.

Eine fehlerhafte Montage des Transponders gegenüber der Sitzschale lässt sich gemäß einer anderen vorteilhaften Weiterbildung der Erfindung zuverlässig verhindern, wenn die außerhalb der Ausnehmung befindliche Noppe zur Blockierung von die Sitzschale mit dem Zwischenkeil verbindenden Befestigungsmitteln gestaltet ist. Diese Blockierung kann beispielsweise dadurch erreicht werden, dass die Noppe die Sitzschale derart kippt, dass sich in dem Zwischenkeil geführte Schrauben nicht in Gewinde der Sitzschale eindrehen lassen.

Das Vertauschen der Transponder gestaltet sich gemäß einer anderen vorteilhaften Weiterbildung der Erfindung besonders komfortabel, wenn die Transponder um eine gemeinsame Drehachse verdrehbar in einer Aufnahme angeordnet sind.

Ein separates Vertauschen der Transponder nach einer Drehung der Sitzschale lässt sich gemäß einer anderen vorteilhaften Weiterbildung der Erfindung einfach vermeiden, wenn die Transponder an der Unterseite der Sitzschale befestigt sind und in die Aufnahme des Zwischenkeils hineinragen.

Die erfindungsgemäße Einrichtung lässt sich dauerhaft wartungsfrei betreiben, wenn Sendeantennen des Sensorelements zur Stromversorgung der Transponder gestaltet sind.

Auf dem Fahrzeugsitz befindliche Gegenstände oder ein ohne Transponder montierter Kindersitz lassen sich gemäß einer anderen vorteilhaften Weiterbildung der Erfindung einfach erfassen, wenn der Fahrzeugsitz einen Foliendrucksensor aufweist. Solche Foliendrucksensoren erfassen die Abmessungen der auf dem Fahrzeugsitz befindlichen Gegenstände und deren ungefähres Gewicht. Mit einer die Signale des Foliendrucksensors erfassenden Steuerelektronik lässt sich hierdurch auch bei quer zur Fahrtrichtung angeordneten Kindersitz oder einem Kindersitz, dessen Ausrichtung nicht bestimmbar ist, eine Auslösung des Airbags unterbinden.

Heutige Fahrzeugsitze sind meist ohnehin mit Foliendrucksensoren ausgerüstet. Hierbei gestaltet sich die Montage der erfindungsgemäßen Einrichtung besonders einfach, wenn der Foliendrucksensor und das Sensorelement als bauliche Einheit gestaltet sind.

Die erfindungsgemäße Einrichtung gestaltet sich besonders kostengünstig, wenn die Sendeantennen und Empfangsantennen des Sensorelements auf dem Foliendrucksensor aufgedruckt sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen auf einem Fahrzeugsitz eines Kraftfahrzeuges montierten Kindersitz mit einer erfindungsgemäßen Einrichtung,
- Fig. 2: eine Schnittdarstellung durch den Fahrzeugsitz aus Figur 1 entlang der Linie II - II,
- Fig. 3: eine perspektivische Explosionsdarstellung des Kindersitzes aus Figur 1 vor der Montage auf einem Zwischenkeil.

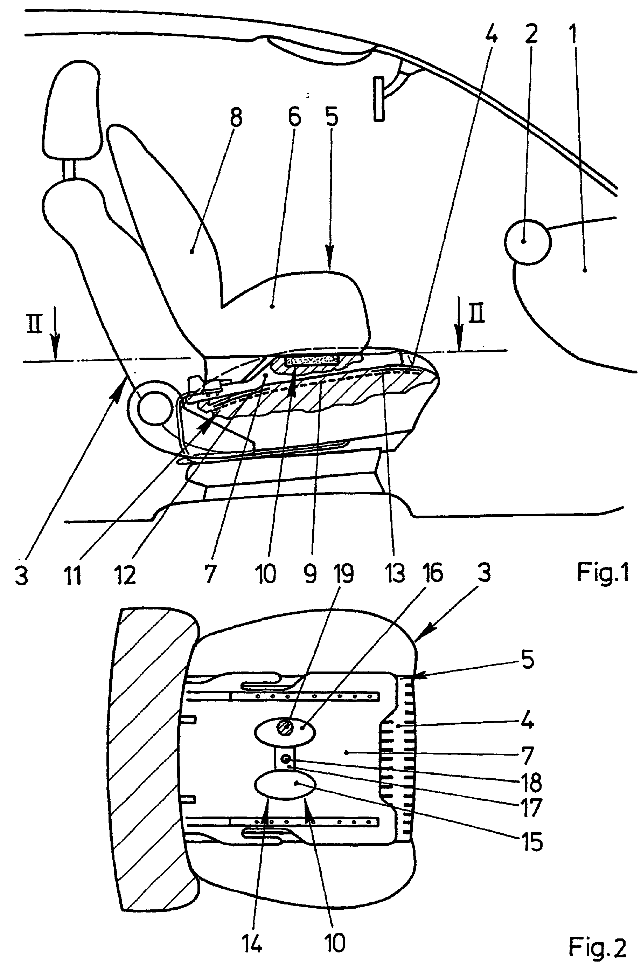

Figur 1 zeigt einen Innenraum eines Kraftfahrzeuges mit einem auf einer Beifahrerseite hinter einem Armaturenbrett 1 mit einem Airbag 2 angeordneten Fahrzeugsitz 3. Auf einer Sitzfläche 4 des Fahrzeugsitzes 3 ist ein Kindersitz 5 befestigt. Der Kindersitz 5 hat eine Sitzschale 6 und einen Zwischenkeil 7 zum Ausgleich eines Neigungswinkels der Sitzfläche 4 des Fahrzeugsitzes 3. Die Sitzschale 6 lässt sich wahlweise mit ihrer Lehne 8 in Fahrtrichtung weisend oder entgegen der Fahrtrichtung auf dem Zwischenkeil 7 befestigen. Bei einer Montage der Sitzschale 6 mit ihrer Lehne 8 in Fahrtrichtung weisend ist das Auslösen des Airbags 2 bei einem Crash des Kraftfahrzeuges zu unterbinden. Hierfür hat der Fahrzeugsitz 3 einen Foliendrucksensor 9 und ein eine in dem Zwischenkeil 7 angeordnete Transpondereinrichtung 10 erfassendes Sensorelement 11. Das Sensorelement 11 weist in jeder Sitzseite des Fahrzeugsitzes 3 angeordnete Empfangsantennen 12 und Sendeantennen 13 zur Versorgung der Transpondereinrichtung 10 mit elektrischem Strom auf. Zur Verdeutlichung ist der Zwischenkeil 7 in der Zeichnung teilweise geschnitten dargestellt. Die Transpondereinrichtung 10 lässt sich mit der Sitzschale 6 des Kindersitzes 5 drehen. Das Sensorelement 11 erfasst das Vorhandensein und die Ausrichtung der Transpondereinrichtung 10. In Abhängigkeit von den Signalen des Sensorelements 11 verhindert eine nicht dargestellte Steuerelektronik das Auslösen des Airbags 2 oder gibt dessen Auslösung frei.

Figur 2 zeigt in einer Schnittdarstellung durch den Fahrzeugsitz 3 und den Kindersitz 5 aus Figur 1 entlang der Linie II - II, dass die Transpondereinrichtung 10 zwei in einer Aufnahme 14 des Zwischenkeils 7 eingesetzte Transponder 15, 16 hat. Die Transponder 15, 16 sind über eine Brücke 17 miteinander verbunden und lassen sich nach einem Herausheben aus der Aufnahme 14 um eine Drehachse 18 verdrehen. Die Transponder 15, 16 sind unterschiedlich aufgebaut, so dass das in Figur 1 dargestellte Sensorelement 11 die Transponder 15, 16 unterscheiden und damit die Ausrichtung der in Figur 1 dargestellten Sitzschale 6 des Kindersitzes 5 erfassen kann. Einer der Transponder 16 hat eine Noppe 19 als Codiermittel gegenüber der Sitzschale 6.

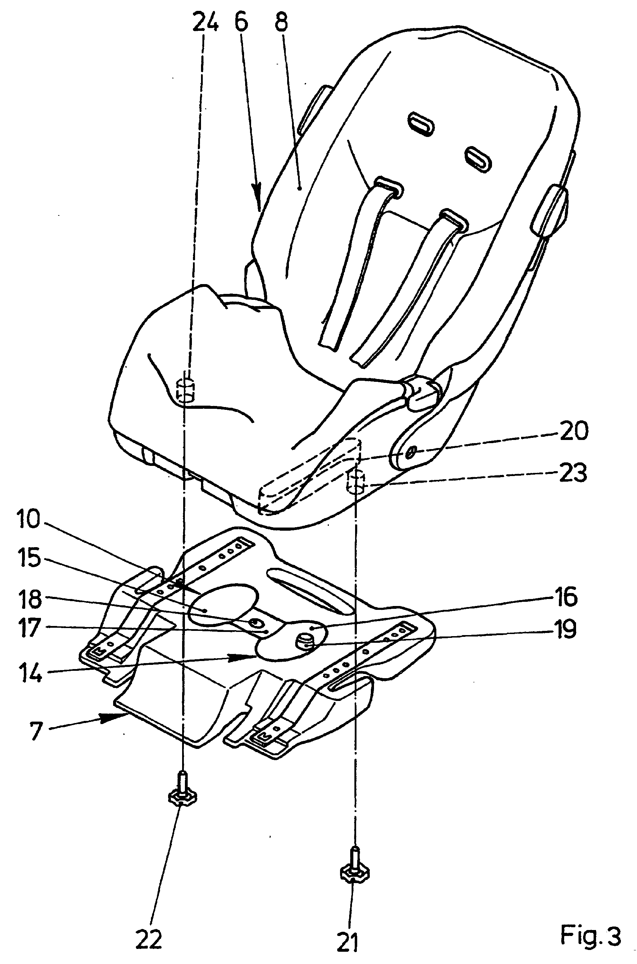

Figur 3 zeigt in einer perspektivischen Explosionsdarstellung des Kindersitzes 5 aus Figur 1, dass die Noppe 19 des einen Transponders 16 in eine Ausnehmung 20 der Sitzschale 6 eindringt. Die Sitzschale 6 und der Zwischenkeil 7 sind mittels als Schrauben ausgebildeter Befestigungsmittel 21, 22 miteinander verbindbar. In der Zeichnung sind stellvertretend für mehrere Befestigungsmittel 21, 22 nur zwei Schrauben dargestellt. Die Befestigungsmittel 21, 22 werden in dem Zwischenkeil 7 geführt und lassen sich, wenn sich die Noppe 19 innerhalb der Ausnehmung 20 befindet, in an der Unterseite der Sitzschale 6 angeordnete Gewindehülsen 23, 24 eindrehen. Hierdurch kann nicht vergessen werden, die Transpondereinrichtung 10 mitzudrehen, wenn die Sitzschale 6 auf dem Zwischenkeil 7 um 180° verdreht befestigt wird.

## Patentansprüche

1. Einrichtung zur Erfassung der Ausrichtung eines auf einem Fahrzeugsitz (3) eines Kraftfahrzeuges befestigten Kindersitzes (5) mit zwei in dem Kindersitz (5) angeordneten, unterschiedlich gestalteten Transpondern (15, 16) und mit einem in dem Fahrzeugsitz (3) angeordneten Sensorelement (11) zur Erfassung und zur Unterscheidung der Transponder (15, 16), wobei die Transponder (15, 16) vertauschbar in einem unterhalb einer Sitzschale (6) des Kindersitzes (5) auf dem Fahrzeugsitz (3) zu befestigenden Zwischenkeil (7) des Kindersitzes (5) angeordnet sind, **dadurch gekennzeichnet, dass** einer der Transponder (16) formschlüssig mit der Sitzschale (6) zusammenarbeitende, mechanische Codiermittel aufweist.

2. Einrichtung nach Anspruch 1, **dadurch gekennzeichnet, dass** die Codiermittel eine auf einem der Transponder (16) angeordnete Noppe (19) und eine in der Sitzschale (6) angeordnete Ausnehmung (20) für die Noppe (19) aufweisen.

3. Einrichtung nach Anspruch 1 oder 2, **dadurch gekennzeichnet, dass** die außerhalb der Ausnehmung (20) befindliche Noppe (19) zur Blockierung von die Sitzschale (6) mit dem Zwischenkeil (7) verbindenden Befestigungsmitteln (21, 22) gestaltet ist.

4. Einrichtung nach zumindest einem der vorhergehenden Ansprüche, **dadurch gekennzeichnet, dass** die Transponder (15, 16) um eine gemeinsame Drehachse (18) verdrehbar in einer Aufnahme (14) angeordnet sind.

5. Einrichtung nach zumindest einem der vorhergehenden Ansprüche, **dadurch gekennzeichnet, dass** die Transponder (15, 16) an der Unterseite der Sitzschale (6) befestigt sind und in die Aufnahme (14) des Zwischenkeils (7) hineinragen.

6. Einrichtung nach zumindest einem der vorhergehenden Ansprüche, **dadurch gekennzeichnet, dass** Sendeantennen (13) des Sensorelements (11) zur Stromversorgung der Transponder (15, 16) gestaltet sind.

7. Einrichtung nach zumindest einem der vorhergehenden Ansprüche, **dadurch gekennzeichnet, dass** der Fahrzeugsitz (3) einen Foliendrucksensor (9) aufweist.

8. Einrichtung nach zumindest einem der vorhergehenden Ansprüche, **dadurch gekennzeichnet, dass** der Foliendrucksensor (9) und das Sensorelement (11) als bauliche Einheit gestaltet sind.

9. Einrichtung nach zumindest einem der vorhergehenden Ansprüche, **dadurch gekennzeichnet, dass** die Sendeantennen (13) und Empfangsantennen (12) des Sensorelements (11) auf dem Foliendrucksensor (9) aufgedruckt sind.

## Claims

1. Apparatus for detecting the orientation of a child seat (5) mounted on a vehicle seat (3) in a motor vehicle comprising two differently designed transponders (15, 16) arranged in the child seat (5) and also comprising a sensor element (11) arranged in the vehicle seat (3) for detecting and distinguishing between the transponders (15, 16), wherein the transponders (15, 16) are arranged in exchangeable manner in an intermediate bolster (7) for the child seat (5), said bolster being adapted to be mounted on the vehicle seat (3) beneath the seating shell (6) of the child seat (5), **characterized in that** one of the transponders (16) comprises a mechanical coding means co-operating in interlocking manner with the seating shell (6).

2. Apparatus in accordance with Claim 1, **characterized in that** the coding means comprises a stud (19) arranged on one of the transponders (16) and a recess (20) for the stud (19) arranged in the seating shell (6).

3. Apparatus in accordance with Claim 1 or 2, **characterized in that** the stud (19) located outside the recess (20) is designed to block fixing means (21, 22) used for connecting the seating shell (6) to the intermediate bolster (7).

4. Apparatus in accordance with at least one of the preceding Claims, **characterized in that** the transponders (15, 16) are arranged in a seating (14) such as to be rotatable about a common axis of rotation (18).

5. Apparatus in accordance with at least one of the preceding Claims, **characterized in that** the transponders (15, 16) are attached to the lower surface of the seating shell (6) and project into the seating (14) in the intermediate bolster (7).

6. Apparatus in accordance with at least one of the preceding Claims, **characterized in that** transmitting antennae (13) of the sensor element (11) are designed to supply power to the transponders (15, 16).

7. Apparatus in accordance with at least one of the preceding Claims, **characterized in that** the vehicle seat (3) comprises a foil-type pressure sensor (9).

8. Apparatus in accordance with at least one of the preceding Claims, **characterized in that** the foil-type pressure sensor (9) and the sensor element (11) are in the form of a structural unit.

9. Apparatus in accordance with at least one of the preceding Claims, **characterized in that** the transmitting antennae (13) and the receiving antennae (12) of the sensor element (11) are printed on the foil-type pressure sensor (9).

## Revendications

1. Dispositif destiné à détecter l'orientation d'un siège pour enfant (5) fixé sur un siège de véhicule (3) d'un véhicule automobile, comportant deux transpondeurs (15, 16), conçus différemment l'un de l'autre et agencés dans le siège pour enfant (5), et comportant un élément capteur (11), agencé dans le siège automobile (3) et destiné à détecter et à différencier les transpondeurs (15, 16), les transpondeurs (15, 16) étant agencés de manière permutable dans une cale intermédiaire (7) du siège pour enfant (5), à fixer en dessous d'une coque (6) du siège pour enfant (5) sur le siège de véhicule (3), **caractérisé en ce que** l'un des transpondeurs (16) comporte des moyens de codage mécaniques coopérant par emboîtement ou liaison de forme avec la coque (6) du siège.

2. Dispositif selon la revendication 1, **caractérisé en ce que** les moyens de codage sont formés par un téton (19) agencé sur l'un des transpondeurs (16) et par un évidement (20), ménagé dans la coque (6) du siège pour le téton (19).

3. Dispositif selon la revendication 1 ou 2, **caractérisé en ce que** le téton (19) situé en dehors de l'évidement (20) est conçu pour bloquer des moyens de fixation (21, 22), par lesquels la coque (6) du siège est assemblée à la cale intermédiaire (7).

4. Dispositif selon au moins l'une des revendications précédentes, **caractérisé en ce que** les transpondeurs (15, 16) sont agencés dans un logement (14) en étant susceptibles de tourner autour d'un axe de rotation (18) commun.

5. Dispositif selon au moins l'une des revendications précédentes, **caractérisé en ce que** les transpondeurs (15, 16) sont fixés sur la face inférieure de la coque (6) du siège et pénètrent dans le logement (14) ménagé dans la cale intermédiaire (7).

6. Dispositif selon au moins l'une des revendications précédentes, **caractérisé en ce que** les antennes d'émission (13) de l'élément capteur (11) sont conçues pour alimenter en courant électrique les transpondeurs (15, 16).

7. Dispositif selon au moins l'une des revendications précédentes, **caractérisé en ce que** le siège automobile (3) comporte un capteur de pression à membrane (9).

8. Dispositif selon au moins l'une des revendications précédentes, **caractérisé en ce que** le capteur de pression à membrane (9) et l'élément capteur (11) sont réalisés sous la forme d'un seul composant.

9. Dispositif selon au moins l'une des revendications précédentes, **caractérisé en ce que** les antennes d'émission (13) et les antennes de réception (12) de l'élément capteur (11) sont imprimées sur le capteur de pression à membrane (9).
